# EUROPÄISCHE PATENTSCHRIFT

(11) **EP 4 030 924 B1**
(45) Veröffentlichungstag und Bekanntmachung des Hinweises auf die Patenterteilung: **08.11.2023**
(21) Anmeldenummer: 20771544.2
(22) Anmeldetag: 10.09.2020
(51) Int. Cl.: A23G 4/04, A23G 4/20

(54) **VERFAHREN ZUR HERSTELLUNG VON TRANSPARENT DRAGIERTEN KAUGUMMIS MIT FARBIGEN KOHLENHYDRATPARTIKELN**
METHOD FOR PRODUCING TRANSPARENTLY SUGAR-COATED CHEWING GUM HAVING COLOURED CARBOHYDRATE PARTICLES
PROCÉDÉ DE PRODUCTION DE CHEWING GUM ENROBÉ DE SUCRE TRANSPARENT, DOTÉ DE PARTICULES DE GLUCIDE COLORÉES

(30) Priorität: 20.09.2019 DE 102019214372
(43) Veröffentlichungstag der Anmeldung: 27.07.2022
(73) Patentinhaber: Südzucker AG, 68165 Mannheim (DE)
(72) Erfinder: HASSLINGER, Bernd, 68165 Mannheim (DE); RICHFIELD, David, 68165 Mannheim (DE); ZSEMBERY, Roland, 68165 Mannheim (DE)
(74) Vertreter: Schrell, Andreas
(86) Internationale Anmeldenummer: PCT/EP2020/075404
(87) Internationale Veröffentlichungsnummer: WO 2021/052870

(56) Entgegenhaltungen:
- EP-A1- 2 774 487
- WO-A1-2016/166092
- DE-U1-202007 012 326
- US-A1- 2002 018 829
- US-A1- 2009 142 443
- US-A1- 2009 142 444

## Beschreibung

Die vorliegende Erfindung betrifft ein Verfahren zur Herstellung von transparent dragierten Kaugummis mit einem heterogen strukturierten Kaugummikern und einer diesen Kern umhüllenden transparenten Drageedecke, wobei farbige Kohlenhydratpartikel, die vor dem Dragieren auf eine Oberfläche des extrudierten Kaugummiformkörpers gestreut und eingewalzt werden, durch die transparente Drageedecke sichtbar sind, sowie mittels dieses Verfahrens hergestellte Kaugummis.

Farbige Kaugummikerne, auch mehrfarbige Kaugummikerne, sind im Stand der Technik bekannt (z.B. US2002/018829).

Beispielsweise offenbart die WO 01/89312 Kaugummikerne, die mehrere verschieden farbige Regionen aufweisen können. Hierfür werden mindestens zwei verschieden farbige Kaugummimassen vorbereitet und über einen Co-Extruder extrudiert, sodass verschieden farbige Schichten, Streifen, eine Marmorierung oder ein von einer anders farbigen Schicht eingeschlossener Kern erhalten wird. Für die Herstellung von mehrfarbigen Kaugummikernen werden somit gegebenenfalls mehr als ein Extruder oder ein Co-Extruder und, je nach Anzahl der Farben, mehrere Mischer oder mehr Zeit für die sequenzielle Herstellung der einzelnen gefärbten Kaugummimassen benötigt. Die Herstellung von mehrfarbigen Kaugummikernen ist daher mit erheblichem Geräte-, Kosten- und/oder Zeitaufwand verbunden.

Harte, knusprige Beschichtungen von Kaugummikernen, sogenannte Drageedecken, sind im Stand der Technik ebenfalls bekannt. Bisher wurden solche Beschichtungen üblicherweise mit Farbpigmenten hergestellt, wobei für weiße Beschichtungen Titandioxid, Calciumcarbonat oder Stärke verwendet wird und für farbige Beschichtungen andere Lebensmittelfarben eingesetzt werden. Gefärbte Kaugummikerne transparent zu beschichten, sodass die Färbung der Kerne durch die Beschichtung zu sehen ist, ist ebenfalls aus dem Stand der Technik bekannt. Beispielsweise beschreibt die oben erwähnte WO 01/89312 auch eine transparente Beschichtung der mehrfarbigen Kaugummikerne, hauptsächlich bestehend aus Sorbitol, wobei auch Bindemittel wie Gummi arabicum, Süßungsmittel, Aromen und Ähnliches enthalten sein können.

Die WO 2016/166092 offenbart transparent beschichtete Süßwarenprodukte, wobei der Kern der Süßwarenprodukte ein oder mehrere durch die Beschichtung sichtbare Materialien umfasst, wobei diese Materialien verschiedene Farben aufweisen können. Die gegebenenfalls verschiedene Farben aufweisenden Materialien sind durchgängig integral im gesamten Kern verteilt. Die Bereitstellung derartiger Produkte ist einerseits kostenaufwendig, da eine vergleichsweise große Menge an farbigen Materialien benötigt wird, und darüber hinaus ist die Knusprigkeit zumindest für bestimmte Konsumentenkreise nicht ausreichend genug ausgeprägt.

Das der vorliegenden Erfindung zugrunde liegende Problem ist es organoleptisch und optisch besonders ansprechende Kaugummis, insbesondere mit einer verbesserten Knusprigkeit, bereitzustellen, die darüber hinaus besonders einfach und kostengünstig herzustellen sind.

Die vorliegende Erfindung löst das ihr zugrunde liegende technische Problem durch die Bereitstellung der Lehren der unabhängigen Ansprüche.

Insbesondere betrifft die vorliegende Erfindung ein Verfahren zur Herstellung von transparent dragierten Kaugummis mit einem heterogen strukturierten Kaugummikern und einer diesen Kern umhüllenden transparenten Drageedecke umfassend die folgenden Verfahrensschritte, insbesondere bestehend aus den folgenden Verfahrensschritten:
a) Bereitstellen von Kaugummikernkomponenten, insbesondere mindestens einer Kaugummigrundmasse und mindestens einem ersten Kohlenhydrat, farbigen Kohlenhydratpartikeln mit einem Partikeldurchmesser von 0,2 bis 2 mm, sowie einem transparenten Dragiermedium enthaltend mindestens ein zweites Kohlenhydrat,
b) Mischen und Kneten der Kaugummikernkomponenten zum Erhalt einer Kaugummikernmasse,
c) Extrudieren der Kaugummikernmasse zum Erhalt eines extrudierten Kaugummiformkörpers,
d) Aufstreuen der farbigen Kohlenhydratpartikel auf eine Oberfläche des extrudierten Kaugummiformkörpers,
e) Walzen des mit farbigen Kohlenhydratpartikeln bestreuten Kaugummiformkörpers,
f) Schneiden des in Schritt e) erhaltenen gewalzten Kaugummiformkörpers zum Erhalt von heterogen strukturierten Kaugummikernen,
g) Dragieren der in Schritt f) erhaltenen heterogen strukturierten Kaugummikerne mit dem transparenten Dragiermedium und
h) Erhalt von transparent dragierten Kaugummis mit heterogen strukturiertem Kaugummikern.

Im Zusammenhang mit der vorliegenden Erfindung wird unter einem heterogen strukturierten Kaugummikern ein Formkörper aus extrudierter Kaugummikernmasse verstanden, auf dessen Oberfläche farbige Kohlenhydratpartikel aufgestreut wurden, welche durch das erfindungsgemäß vorgesehene anschließende Walzen des Kaugummiformkörpers in die Kaugummikernmasse eingedrückt wurden. Erfindungsgemäß werden die farbigen Kohlenhydratpartikel oberflächlich auf den Kaugummiformkörper aufgebracht und sind demgemäß nicht oder nicht vollständig von der Kaugummikernmasse umschlossen. Dadurch ist, auch nach dem erfindungsgemäß vorgesehenen Walzen, bevorzugt die gesamte, aus einer bestimmten Blickperspektive grundsätzlich sichtbare und durch den maximalen Umfang der farbigen Kohlenhydratpartikel vorgegebene Partikeloberfläche sichtbar oder zumindest ein wesentlicher Anteil davon. Unter der Annahme einer in bevorzugter Ausführungsform vorgesehenen im Wesentlichen kugeligen Form der farbigen Kohlenhydratpartikel ist also die gesamte Kugelhalboberfläche oder ein wesentlicher Anteil davon sichtbar. Die Sichtbarkeit der farbigen Kohlenhydratpartikel bleibt auch nach dem erfindungsgemäß vorgesehenen Dragieren der heterogen strukturierten Kaugummikerne mit dem transparenten Dragiermedium erhalten. Die farbigen Kohlenhydratpartikel zeichnen sich durch eine Farbe aus, die von der Farbe der extrudierten Kaugummikernmasse abweicht, sodass ein heterogen strukturierter Kaugummikern, insbesondere ein optisch und strukturell heterogener Kaugummikern, ausgebildet wird.

Die vorliegende Erfindung stellt daher vorteilhafterweise ein Verfahren zur Verfügung mit dem transparent, insbesondere durchsichtig, dragierte Kaugummis mit einem heterogen strukturierten Kaugummikern besonders einfach und kostengünstig, insbesondere ohne den Einsatz mehrerer Extruder oder eines Co-Extruders beziehungsweise einer Vielzahl von Mischern, hergestellt werden können. Durch Aufstreuen der farbigen Kohlenhydratpartikel auf den extrudierten Kaugummiformkörper kann in einfacher Art und Weise eine mindestens zweifarbige Oberfläche des Kaugummiformkörpers hergestellt werden, welche durch die transparente Drageedecke weiterhin sichtbar bleibt. Durch das erfindungsgemäße Bestreuen einer Oberfläche der extrudierten Kaugummikernmasse und dem anschließenden Einwalzen der farbigen Kohlenhydratpartikel sind diese im Vergleich zu mit der Kaugummikernmasse vermischten Kohlenhydratpartikeln, die integral und daher von der Kaugummikernmasse umschlossen im Kern vorliegen, besonders gut sichtbar, sodass die erhaltenen transparent dragierten Kaugummis auch optisch besonders ansprechend sind. Die vorliegende Erfindung ermöglicht es daher mit einer vergleichsweise geringen Menge an farbigen Kohlenhydratpartikeln einen besonders deutlichen optischen Effekt, insbesondere einen deutlichen farblichen Effekt, im Verhältnis zur verwendeten Menge an Kaugummikernmasse zu erreichen, da alle in das Verfahren eingebrachten farbigen Kohlenhydratpartikel auf der Oberfläche des Kaugummikerns sichtbar sind und zum optischen Farbeindruck beitragen.

Das erfindungsgemäß vorgesehene Aufstreuen der farbigen, insbesondere gefärbten, Kohlenhydratpartikel auf die Oberfläche des extrudierten Kaugummiformkörpers reduziert daher die Menge der einzusetzenden farbigen Kohlenhydratpartikel beziehungsweise einzusetzender gefärbter Komponenten im Vergleich zu einem Verfahren, in dem farbige Komponenten in die komplette Kaugummikernmasse eingearbeitet werden, erheblich. Dies deshalb, weil erfindungsgemäß das Einbringen der farbigen Kohlenhydratpartikel lediglich in den Bereichen der Kaugummikernmasse realisiert wird, die von außen durch die transparente Beschichtung sichtbar sind, das heißt die Oberfläche des Kaugummiformkörpers.

Des Weiteren sind die mithilfe des vorliegenden Verfahrens erhaltenen Kaugummis organoleptisch und sensorisch besonders ansprechend, da die auf die Kaugummikernmasse aufgestreuten und eingewalzten farbigen Kohlenhydratpartikel zu einer Verbesserung der Knusprigkeit führen. Dies wird dadurch erreicht, dass die farbigen Kohlenhydratpartikel, die mit einem Partikeldurchmesser von 0,2 bis 2 mm recht groß sind, eine zusätzliche kristalline, knusprige Zwischenschicht (im Folgenden auch Crunch-Zwischenschicht genannt) an der Oberfläche des Kaugummikerns und unterhalb der knusprigen Drageedecke ausbilden. Bevorzugt bilden die farbigen Kohlenhydratpartikel eine Crunch-Zwischenschicht mit einer Höhe von 0,2 bis 2 mm. Die erfindungsgemäße Verfahrensweise führt daher zur Herstellung transparent dragierter Kaugummis, umfassend einen mindestens ein erstes Kohlenhydrat enthaltenden Kaugummikern und eine diesen Kaugummikern umhüllende transparente, mindestens ein zweites Kohlenhydrat enthaltende Drageedecke, wobei eine Oberfläche des Kaugummikerns als Crunch-Zwischenschicht mit einer Höhe von 0,25 bis 2 mm ausgebildet ist, die farbige Kohlenhydratpartikel aufweist und die von der das zweite Kohlenhydrat enthaltenden Drageedecke umhüllt ist.

In besonders bevorzugter Ausführungsform bleiben die Transparenz oder die Knusprigkeit oder die Transparenz und Knusprigkeit des erfindungsgemäß bereitgestellten Kaugummis besonders stabil auch über einen längeren Zeitraum erhalten.

Das Verfahren sieht in einem ersten Verfahrensschritt a) vor, Kaugummikernkomponenten, insbesondere mindestens eine Kaugummigrundmasse und mindestens ein erstes Kohlenhydrat sowie farbige Kohlenhydratpartikel mit einem Partikeldurchmesser von 0,2 bis 2 mm sowie ein transparentes Dragiermedium, enthaltend mindestens ein zweites Kohlenhydrat, bereitzustellen.

Das Verfahren gemäß der vorliegenden Erfindung sieht in Verfahrensschritt b) vor, die in Verfahrensschritt a) bereitgestellten Kaugummikernkomponenten, insbesondere mindestens eine Kaugummigrundmasse und mindestens ein erstes Kohlenhydrat, zu mischen und zu kneten. Hierfür können übliche Misch- und/oder Knetvorrichtungen verwendet werden.

Die mindestens eine Kaugummigrundmasse ist bevorzugt wasserunlöslich und kann Elastomere, Wachse, Fette oder Öle, Füllstoffe sowie weitere übliche Bestandteile enthalten. Bevorzugt ist die mindestens eine Kaugummigrundmasse eine handelsübliche Kaugummigrundmasse. In einer bevorzugten Ausführungsform der vorliegenden Erfindung wird eine Mischung aus zwei oder mehr verschiedenen Kaugummigrundmassen verwendet.

Besonders bevorzugt ist die Kaugummigrundmasse weiß oder beige. Es kann aber auch vorgesehen sein, dass die Kaugummigrundmasse farbig ist, insbesondere mit einer Lebensmittelfarbe gefärbt, vorliegt.

Besonders bevorzugt enthält die in Verfahrensschritt b) erhaltene Kaugummikernmasse 20 bis 40 Gew.-%, bevorzugt 25 bis 37 Gew.-%, besonders bevorzugt 30 bis 35 Gew.-% Kaugummigrundmasse (bezogen auf die Gesamttrockensubstanz der Kaugummikern-komponenten).

Weiterhin bevorzugt enthält die in Verfahrensschritt b) erhaltene Kaugummikernmasse 40 bis 70 Gew.-%, bevorzugt 50 bis 60 Gew.-%, besonders bevorzugt 55 bis 65 Gew.-% des mindestens einen ersten Kohlenhydrats (bezogen auf Gesamttrockensubstanz der Kaugummikern-komponenten).

In einer bevorzugten Ausführungsform der vorliegenden Erfindung ist das mindestens eine erste Kohlenhydrat, das mit der Kaugummigrundmasse in Verfahrensschritt b) gemischt und geknetet wird, ein Polyol, insbesondere ein Zuckeralkohol, insbesondere ein Di- oder Monosaccharidalkohol. Insbesondere ist das mindestens eine erste Kohlenhydrat ein Polyol ausgewählt aus der Gruppe bestehend aus Isomalt, Sorbit, Xylit, hydrogeniertem Stärkehydrolysat, insbesondere Maltitsirup, Maltit, Mannit, Erythrit, Lactit, Isomalt ST, Isomalt GS, 1,1-GPM, 1,6-GPS, 1,1-GPS und Kombinationen davon.

Besonders bevorzugt ist das mindestens eine erste Kohlenhydrat Isomalt, insbesondere Isomalt ST oder Isomalt GS.

In einer besonders bevorzugten Ausführungsform ist das mindestens eine erste Kohlenhydrat ein Gemisch von mindestens zwei ersten Kohlenhydraten, zum Beispiel ein Gemisch von zwei, drei, vier oder fünf verschiedenen ersten Kohlenhydraten.

Es kann erfindungsgemäß also auch bevorzugt vorgesehen sein, mindestens zwei, mindestens drei oder mindestens vier, insbesondere genau zwei, drei oder vier, verschiedene erste Kohlenhydrate einzusetzen. Diese sind bevorzugt alle Polyole, insbesondere Zuckeralkohole, insbesondere Mono- oder Disaccharidalkohole, insbesondere ausgewählt aus der Gruppe bestehend aus Isomalt, Sorbit, Xylit, hydrogeniertem Stärkehydrolysat, insbesondere Maltitsirup, Maltit, Mannit, Erythrit, Lactit, Isomalt ST, Isomalt GS, 1,1-GPM, 1,6-GPS, 1,1-GPS und Kombinationen davon. Erfindungsgemäß bevorzugt ist eines der mindestens zwei, mindestens drei oder mindestens vier ersten Kohlenhydrate Isomalt, insbesondere Isomalt ST oder Isomalt GS.

Vorzugsweise werden mindestens zwei erste Kohlenhydrate, insbesondere Polyole, als Kaugummikernkomponenten eingesetzt. Besonders bevorzugt werden Sorbit und Isomalt oder Maltitsirup, insbesondere Maltit und Isomalt als zwei erste Kohlenhydrate eingesetzt. In einer besonders bevorzugten Ausführungsform ist das mindestens eine erste Kohlenhydrat ein Gemisch von zwei ersten Kohlenhydraten, insbesondere Isomalt, insbesondere Isomalt ST, und Maltitsirup, insbesondere Maltit.

Besonders bevorzugt enthält die in Verfahrensschritt b) erhaltene Kaugummikernmasse 40 bis 70 Gew.-%, bevorzugt 50 bis 60 Gew.-%, besonders bevorzugt 55 bis 65 Gew.-% der zwei ersten Kohlenhydrate (bezogen auf Gesamttrockensubstanz der Kaugummikernkomponenten).

In einer besonders bevorzugten Ausführungsform ist das mindestens eine erste Kohlenhydrat ein Gemisch von drei ersten Kohlenhydraten, insbesondere Isomalt, insbesondere Isomalt ST, Maltitsirup, insbesondere Maltit und Sorbit.

Weiterhin bevorzugt enthält die in Verfahrensschritt b) erhaltene Kaugummikernmasse 40 bis 70 Gew.-%, bevorzugt 50 bis 60 Gew.-%, besonders bevorzugt 55 bis 65 Gew.-% der mindestens drei ersten Kohlenhydrate (bezogen auf Gesamttrockensubstanz der Kaugummikern-komponenten).

Die in Verfahrensschritt b) erhaltene Kaugummikernmasse ist bevorzugt Isomalt-haltig.

In einer bevorzugten Ausführungsform der vorliegenden Erfindung ist das mindestens eine erste Kohlenhydrat, das mit der Kaugummigrundmasse in Verfahrensschritt b) gemischt und geknetet wird, pulverförmig. Es kann aber auch vorgesehen sein, das mindestens eine erste Kohlenhydrat in gelöster Form oder in Form eines Sirups, das heißt in suspendierter Form, einzusetzen, insbesondere in in Wasser gelöster oder suspendierter Form.

Vorzugsweise enthält die in Verfahrensschritt b) erhaltene Kaugummikernmasse mindestens 10 Gew.-%, bevorzugt mindestens 15 Gew.-%, bevorzugt mindestens 20 Gew.-%, bevorzugt mindestens 25 Gew.-%, bevorzugt mindestens 30 Gew.-% Isomalt als erstes oder als eines der mindestens zwei oder mehr ersten Kohlenhydrate (bezogen auf Gesamttrockensubstanz der Kaugummikernkomponenten).

Besonders bevorzugt enthält die in Verfahrensschritt b) erhaltene Kaugummikernmasse höchstens 15 Gew.-%, bevorzugt höchstens 20 Gew.-%, bevorzugt höchstens 25 Gew.-%, bevorzugt höchstens 30 Gew.-%, bevorzugt höchstens 35 Gew.-% Isomalt als erstes oder als eines der mindestens zwei oder mehr ersten Kohlenhydrate (bezogen auf Gesamttrockensubstanz der Kaugummikernkomponenten).

In einer besonders bevorzugten Ausführungsform weist die in Verfahrensschritt b) erhaltene Kaugummikernmasse 10 bis 35 Gew.-%, insbesondere 15 bis 30 Gew.-%, insbesondere 17 bis 28 Gew.-%, insbesondere 25 Gew.-% Isomalt, insbesondere Isomalt ST als erstes oder als eines der mindestens zwei oder mehr ersten Kohlenhydrate (bezogen auf Gesamttrockensubstanz der Kaugummikernkomponenten) auf.

Besonders bevorzugt enthält die in Verfahrensschritt b) erhaltene Kaugummikernmasse höchstens 15 Gew.-%, bevorzugt höchstens 20 Gew.-%, bevorzugt höchstens 25 Gew.-%, bevorzugt höchstens 30 Gew.-%, bevorzugt höchstens 35 Gew.-% Sorbit als eines der mindestens zwei oder mehr ersten Kohlenhydrate (bezogen auf Gesamttrockensubstanz der Kaugummikernkomponenten).

Besonders bevorzugt enthält die in Verfahrensschritt b) erhaltene Kaugummikernmasse höchstens 8 Gew.-%, bevorzugt höchstens 9 Gew.-%, bevorzugt höchstens 10 Gew.-%, bevorzugt höchstens 11 Gew.-%, bevorzugt höchstens 12 Gew.-% Maltit, insbesondere Maltitsirup, als eines der mindestens zwei oder mehr ersten Kohlenhydrate (bezogen auf Gesamttrockensubstanz der Kaugummikernkomponenten).

Erfindungsgemäß kann vorgesehen sein, dass keines, eins, zwei oder alle drei ersten Kohlenhydrate pulverförmig sind. Es kann weiterhin vorgesehen sein, dass keines, eins, zwei oder alle drei ersten Kohlenhydrate gelöst oder suspendiert als Sirup vorliegen.

In einer bevorzugten Ausführungsform ist die Kaugummikernmasse zuckerfrei.

Es kann in einer Ausführungsform jedoch auch vorgesehen sein, dass das mindestens eine erste Kohlenhydrat ein Zucker, insbesondere in Form von Saccharose, Isomaltulose, Glucose, Fructose oder Lactose ist, vorzugsweise in Kombination mit einem Zuckeralkohol, insbesondere Isomalt, als weiterem ersten Kohlenhydrat.

Weiterhin kann erfindungsgemäß vorgesehen sein, dass das mindestens eine erste Kohlenhydrat Isomaltulose ist, vorzugsweise in Kombination mit einem Zuckeralkohol, insbesondere Isomalt, als weiterem ersten Kohlenhydrat.

In einer besonders bevorzugten Ausführungsform weist die Kaugummikernmasse, abgesehen von Zuckeralkoholen und Intensivsüßstoffen, keine weiteren körpergebenden süßenden Stoffe, insbesondere keine weiteren süßenden Stoffe auf. In einer besonders bevorzugten Ausführungsform der vorliegenden Erfindung weist die Kaugummikernmasse, abgesehen von Zuckeralkoholen, keine weiteren körpergebenden süßenden Stoffe auf, insbesondere keine weiteren süßenden Stoffe. In einer besonders bevorzugten Ausführungsform der vorliegenden Erfindung weist die Kaugummikernmasse, abgesehen von Isomalt und Intensivsüßstoffen, keine weiteren körpergebenden süßenden Stoffe auf, insbesondere keine weiteren süßenden Stoffe. In einer besonders bevorzugten Ausführungsform der vorliegenden Erfindung weist die Kaugummikernmasse abgesehen von Isomalt keine weiteren körpergebenden süßenden Stoffe auf, insbesondere keine weiteren süßenden Stoffe.

In einer bevorzugten Ausführungsform der vorliegenden Erfindung können zusätzlich zu der mindestens einen Kaugummigrundmasse und dem mindestens einen ersten Kohlenhydrat weitere Kaugummikernkomponenten verwendet werden, die bevorzugt ausgewählt sind aus der Gruppe bestehend aus Geschmacksstoffen, Farbstoffen, Prozesshilfsstoffen wie Trenn- oder Gleitmittel, Intensivsüßstoffen, Aromastoffen und Kombinationen davon.

In einer bevorzugten Ausführungsform ist der Intensivsüßstoff ausgewählt aus der Gruppe bestehend aus Aspartam, Acesulfam-K, Sucralose, Saccharin, Glycyrrhizin, Thaumatin, Neohesperidin-Dihydrochalkon, Cyclamat, Steviaextrakt, Steviolglycoside, Steviosid, Rebaudiosid A, Monellin, Alitam und Kombinationen davon. Besonders bevorzugt ist der Intensivsüßstoff Aspartam und/oder Acesulfam-K.

Besonders bevorzugt enthält die in Verfahrensschritt b) erhaltene Kaugummikernmasse 0,01 bis 0,3 Gew.-%, bevorzugt 0,05 bis 0,25 Gew.-%, bevorzugt 0,1 bis 0,2 Gew.-% Intensivsüßstoff (bezogen auf Gesamttrockensubstanz der Kaugummikernkomponenten).

Aromastoffe im Sinne der vorliegenden Erfindung können natürliche, naturidentische oder künstliche Aromastoffe sein, insbesondere Pflanzen- oder Fruchtextrakte, essentielle Öle oder Kombinationen davon sein. Besonders bevorzugte Aromastoffe sind ausgewählt aus der Gruppe bestehend aus Menthol, Pfefferminze, Zimt, Fruchtaromen und Kombinationen davon.

In einer bevorzugten Ausführungsform ist der Aromastoff Pfefferminzaroma oder Mentholaroma.

In einer besonders bevorzugten Ausführungsform enthält die in Verfahrensschritt b) erhaltene Kaugummikernmasse 0,1 bis 5 Gew.-%, insbesondere 0,5 bis 4 Gew.-%, insbesondere 1 bis 3,3 Gew.-%, insbesondere 3 Gew.-% Aromastoffe.

Das Mischen und Kneten des Verfahrensschritts b) findet bevorzugt bei einer Temperatur von 18 bis 30 °C, insbesondere 19 bis 25 °C, insbesondere Raumtemperatur, statt.

Nach Abschluss des in Schritt b) des vorliegenden Verfahrens vorgesehenen Mischens und Knetens der Kaugummikernkomponenten wird bevorzugt eine homogene Kaugummikernmasse erhalten.

Die Kaugummikernmasse wird im anschließenden Verfahrensschritt c) extrudiert. Hierfür kann ein üblicher Extruder eingesetzt werden. Das Extrudieren der Kaugummikernmasse führt bevorzugt zum Erhalt eines Kaugummiformkörpers, insbesondere eines Kaugummistrangs, insbesondere eines flächigen Kaugummistrangs. Bevorzugt wird die Kaugummikernmasse bei einer Temperatur von 35 bis 50 °C, bevorzugt von 40 bis 45 °C extrudiert.

Im anschließenden Verfahrensschritt d) wird der in Verfahrensschritt c) erhaltene Kaugummiformkörper mit farbigen, insbesondere gefärbten, Kohlenhydratpartikeln bestreut. Das heißt insbesondere, dass die farbigen, insbesondere gefärbten, Kohlenhydratpartikel auf eine Oberfläche, bevorzugt eine - von der Auflagefläche des extrudierten Kaugummiformkörpers gesehen - nach oben gewandte Oberfläche des extrudierten Formkörpers aufgestreut werden. Bevorzugt bleiben die farbigen Kohlenhydratpartikel an der Oberfläche des extrudierten Kaugummiformkörpers haften und werden anschließend in eine Oberfläche des Formkörpers eingewalzt.

In einer besonders bevorzugten Ausführungsform kann vorgesehen sein, sämtliche Oberflächen, also die gesamte Oberfläche des Formkörpers mit farbigen, insbesondere gefärbten, Kohlenhydratpartikeln zu bestreuen. In einer anderen Ausführungsform der vorliegenden Erfindung kann es vorgesehen sein, lediglich eine Oberfläche von mehreren Oberflächen des extrudierten Kaugummiformkörpers zu bestreuen. Erfindungsgemäß kann in besonders bevorzugter Ausführungsform vorgehen sein, den Formkörper nach einem ersten Aufstreuen auf eine Oberfläche zu wenden, und in mindestens einem weiteren Aufstreuschritt mindestens eine weitere Oberfläche zu bestreuen, sodass mehrere oder sämtliche Oberflächen des Formkörpers mit farbigen Kohlenhydratpartikeln bestreut werden. In einer besonders bevorzugten Ausführungsform ist es auch möglich, den extrudierten Kaugummiformkörper aus verschiedenen Richtungen, gegebenenfalls auch von unten, mit farbigen Kohlenhydratpartikeln zu bestreuen.

In einer besonders bevorzugten Ausführungsform der vorliegenden Erfindung beträgt der Anteil der farbigen Kohlenhydratpartikel 3 bis 20 Gew.-%, bevorzugt 7 bis 17 Gew.-%, bevorzugt 10 bis 15 Gew.-% an der gesamten Kaugummikernmasse (bezogen auf die gesamte Kaugummikernmasse). Vorteilhafterweise führt ein Anteil von lediglich 3 bis 20 Gew.-%, insbesondere 7 bis 17 Gew.-%, bevorzugt 10 bis 15 Gew.-%, insbesondere 7 Gew.-% der farbigen Kohlenhydratpartikel (bezogen auf die gesamte Kaugummikernmasse) auf einer Oberfläche eines heterogen strukturierten Kaugummikerns zu einer Bedeckung von 20 % dieser Oberfläche, sodass ein besonders deutlicher Farbeffekt bereits mit einer geringen Menge an farbigen Kohlenhydratpartikeln erreicht wird.

Bevorzugt wird also eine vergleichsweise kleine Menge farbiger, insbesondere gefärbter, Kohlenhydratpartikel im Verhältnis zur verwendeten Menge an Kaugummimasse eingesetzt. Dadurch, dass die farbigen Kohlenhydratpartikel erfindungsgemäß nicht mit der Kaugummimasse vermischt, sondern auf eine Oberfläche des extrudierten Kaugummiformköpers aufgestreut und anschließend eingewalzt werden, wird mit einer vergleichsweise kleinen Menge an farbigen Kohlenhydratpartikeln ein maximaler Farbeffekt erzielt, da alle Kohlenhydratpartikel auch auf der Oberfläche des Kaugummis sichtbar sind.

Die erfindungsgemäße Verfahrensführung führt bevorzugt dazu, dass spezifisch eine Oberfläche des Kaugummiformkörpers einen Farbeffekt aufweist, der durch die aufgestreuten farbigen Kohlenhydratpartikel erzielt wird. Insbesondere wird durch die farbigen Kohlenhydratpartikel ein gepunkteter, getupfter oder fleckiger Farbeffekt erzielt.

In einer bevorzugten Ausführungsform weisen mindestens 80 Gew.-%, bevorzugt mindestens 85 Gew.-%, bevorzugt mindestens 90 Gew.-%, bevorzugt mindestens 95 Gew.-%, bevorzugt 100 Gew.-% der in Verfahrensschritt a) bereitgestellten und in Verfahrensschritt d) auf eine Oberfläche des Kaugummiformkörpers aufgestreuten, farbigen Kohlenhydratpartikel (bezogen auf die Gesamttrockensubstanz der farbigen Kohlenhydratpartikel) einen Partikeldurchmesser von 0,2 bis 2 mm, vorzugsweise 0,3 bis 1,8 mm, vorzugsweise 0,4 bis 1,7 mm, vorzugsweise 0,5 bis 1,6 mm, vorzugsweise 0,6 bis 1,5 mm, vorzugsweise 0,7 bis 1,4 mm, insbesondere 0,8 bis 1,3 mm auf.

In bevorzugter Ausführungsform weisen mindestens 90 % der farbigen Kohlenhydratpartikel, insbesondere Isomalt-Partikel, einen Partikeldurchmesser von 0,8 bis 1,3 mm, insbesondere 0,9 bis 1,25 mm auf.

In einer besonders bevorzugten Ausführungsform der vorliegenden Erfindung sind die farbigen, insbesondere gefärbten, Kohlenhydratpartikel Polyolpartikel. Insbesondere sind die farbigen Kohlenhydratpartikel Polyolpartikel, wobei das Polyol ein Zuckeralkohol, insbesondere ein Di- oder Monosaccharidzuckeralkohol ist, insbesondere ausgewählt ist aus der Gruppe bestehend aus Isomalt, Sorbit, Xylit, Maltit, Mannit, Erythrit, Lactit, Isomalt ST, Isomalt GS, 1,1-GPM, 1,6-GPS, 1,1-GPS und Kombinationen davon. Besonders bevorzugt sind die farbigen Kohlenhydratpartikel Isomaltpartikel, insbesondere Isomalt ST-Partikel oder Isomalt GS-Partikel.

Die farbigen, insbesondere gefärbten, Kohlenhydratpartikel, insbesondere Isomaltpartikel, können bevorzugt mindestens einen Farbstoff enthalten. In besonders bevorzugter Ausführungsform enthalten die farbigen Kohlenhydratpartikel mindestens einen Farbstoff, der von dem/den gegebenenfalls in der Kaugummigrundmasse enthaltenen Farbstoff/-en unterschiedlich ist.

Die farbigen, insbesondere gefärbten, Kohlenhydratpartikel, insbesondere Isomaltpartikel, können bevorzugt mindestens einen Aromastoff enthalten. In besonders bevorzugter Ausführungsform enthalten die farbigen Kohlenhydratpartikel mindestens einen Aromastoff, der von dem/den gegebenenfalls in der Kaugummigrundmasse enthaltenen Aromastoff/-en unterschiedlich ist.

In einer bevorzugten Ausführungsform der vorliegenden Erfindung weisen alle im Verfahrensschritt d) aufgestreuten farbigen Kohlenhydratpartikel die gleiche Farbe auf. Es kann jedoch auch vorgesehen sein, dass eine Mischung von unterschiedlich farbigen Kohlenhydratpartikeln, die jeweils eine andere Farbe aufweisen, verwendet wird, sodass eine Mischung von mindestens zwei oder mehr unterschiedlichen farbigen Kohlenhydratpartikeln verwendet wird.

In bevorzugter Ausführungsform sind die farbigen Kohlenhydratpartikel nicht weiß. In bevorzugter Ausführungsform sind die farbigen Kohlenhydratpartikel nicht beige. In bevorzugter Ausführungsform der vorliegenden Erfindung ist der Kaugummiformkörper weiß und die farbigen Kohlenhydratpartikel weisen eine nicht weiße Farbe auf. In einer besonders bevorzugten Ausführungsform der vorliegenden Erfindung ist der Kaugummiformkörper beige und die farbigen Kohlenhydratpartikel weisen eine nicht beige Farbe auf.

Weiterhin kann auch bevorzugt vorgesehen sein, dass die farbigen Kohlenhydratpartikel weiß sind und auf einen nicht weißen Kaugummiformkörper aufgestreut werden.

Im anschließenden Verfahrensschritt e) des vorliegenden Verfahrens werden die auf eine Oberfläche des extrudierten Kaugummiformkörpers aufgestreuten farbigen Kohlenhydratpartikel eingewalzt. Dies erfolgt bevorzugt so, dass wenig Druck ausgeübt wird. Die Partikel werden nur leicht, bevorzugt oberflächlich in die Kaugummikernmasse eingedrückt. Bevorzugt ragen die Kohlenhydratpartikel mit einem nur geringen Anteil ihres durchschnittlichen Durchmessers, insbesondere 1 bis 50 %, insbesondere 10 bis 40 %, insbesondere 15 bis 35 %, insbesondere 20 bis 30 % ihres durchschnittlichen Durchmessers in die Kaugummikernmasse des Kaugummiformkörpers hinein.

Die farbigen, insbesondere gefärbten, Kohlenhydratpartikel, insbesondere alle aufgestreuten farbigen Kohlenhydratpartikel, sind aufgrund ihrer von der Kaugummikernmasse abweichenden Farbe auf dem Hintergrund der Kaugummikernmasse komplett, bevorzugt in vollem Umfang, sichtbar.

Es kann jedoch auch vorgesehen sein, dass beim Einwalzen der farbigen Kohlenhydratpartikel ein größerer Druck ausgeübt wird, sodass die Partikel tiefer in die Kaugummikernmasse eingedrückt werden und nur teilweise auf dem Hintergrund der Kaugummikernmasse sichtbar sind. Bevorzugt ragen die Kohlenhydratpartikel mit einem größeren Anteil ihres durchschnittlichen Durchmessers, insbesondere 50 bis 100 %, insbesondere 60 bis 90 %, insbesondere 65 bis 85 %, insbesondere 70 bis 80 % ihres durchschnittlichen Durchmessers in die Kaugummikernmasse des Kaugummiformkörpers hinein.

Im vorliegenden Verfahren werden die farbigen Kohlenhydratpartikel nicht mit der Kaugummikernmasse vermischt.

Nach Verfahrensschritt e) des erfindungsgemäßen Verfahrens, das heißt dem Walzen des bestreuten Kaugummiformkörpers, kann optional ein Konditionierungsschritt vorgesehen sein, in dem der gewalzte Kaugummiformkörper auf Raumtemperatur abgekühlt wird.

Nach Verfahrensschritt e) oder dem optional darauf folgenden Konditionierungsschritt wird in Verfahrensschritt f) des vorliegenden Verfahrens der mit farbigen Kohlenhydratpartikeln bestreute und gewalzte Kaugummiformkörper geschnitten, insbesondere so, dass einzelne Kaugummikerne, insbesondere heterogen strukturierte Kaugummikerne erhalten werden. Besonders bevorzugt werden die heterogen strukturierten Kaugummikerne in Form eines Streifens, Kissens, Stäbchens oder einer Scheibe geschnitten.

In Verfahrensschritt g) des vorliegenden Verfahrens werden die in Verfahrensschritt f) erhaltenen heterogen strukturierten Kaugummikerne mit dem transparenten Dragiermedium, insbesondere einer transparenten Dragierlösung, dragiert.

Verfahrensschritt g) führt daher zur Ausbildung einer Drageedecke, umhüllend den heterogen strukturierten Kaugummikern, erhalten in Schritt f).

In einer besonders bevorzugten Ausführungsform der vorliegenden Erfindung wird in Verfahrensschritt g) der heterogen strukturierte Kaugummikern mit dem transparenten Dragiermedium dragiert, insbesondere in Verfahrensschritt g1) Dragiermedium aufgetragen und in Verfahrensschritt g2) getrocknet. Das Auftragen in Verfahrensschritt g1) und anschließende Trocknen in Verfahrensschritt g2) des Dragiermediums, hier auch als Zyklus bezeichnet, kann mehr als einmal, insbesondere zum Beispiel fünf- bis hundertmal erfolgen.

In einer bevorzugten Ausführungsform der vorliegenden Erfindung wird der Verfahrensschritt g) in mindestens zwei Zyklen, bevorzugt 5 bis 100 Zyklen, bevorzugt 10 bis 95 Zyklen, insbesondere 20 bis 80 Zyklen durchgeführt. Jeder einzelne Zyklus umfasst einen Schritt des Auftragens (g1)) von Dragiermedium und einen anschließenden Trocknungsschritt (g2)) und führt bevorzugt zur Ausbildung einer Dragierschicht.

In bevorzugter Ausführungsform wird das Dragiermedium in Verfahrensschritt g1) auf die Kaugummikerne aufgebracht, indem es aufgesprüht wird.

In einer besonders bevorzugten Ausführungsform findet Verfahrensschritt g1) bei einer Temperatur von 30 bis 75 °C, insbesondere 40 bis 70 °C, insbesondere 50 bis 70 °C, insbesondere 55 bis 65 °C, insbesondere 60 °C statt.

In einer besonders bevorzugten Ausführungsform wird im Rahmen von Verfahrensschritt g) in mindestens einem Trocknungsschritt, nämlich einem Verfahrensschritt g2), eine Trocknung der mit der dem transparenten Dragiermedium, insbesondere der transparenten Dragierlösung, dragierten Kaugummikerne durchgeführt.

Der mindestens eine Trocknungsschritt g2) kann bei einer Temperatur von 18 bis 40 °C, insbesondere 20 bis 35 °C, insbesondere 22 bis 30 °C durchgeführt werden, insbesondere unter Einsatz von warmer Trockenluft. In bevorzugter Ausführungsform wird in Verfahrensschritt g2) eine relative Luftfeuchte von 5 bis 40 %, insbesondere 5 bis 20 %, insbesondere <20 %, insbesondere <18 %, insbesondere <15 % eingestellt.

In einer bevorzugten Ausführungsform der vorliegenden Erfindung ist das in dem transparenten Dragiermedium enthaltene mindestens eine zweite Kohlenhydrat ein Polyol, insbesondere ein Zuckeralkohol, insbesondere ein Di- oder Monosaccharidalkohol.

In einer besonders bevorzugten Ausführungsform ist das zweite Kohlenhydrat kristallin. In einer besonders bevorzugten Ausführungsform ist das zweite Kohlenhydrat teilkristallin.

In einer besonders bevorzugten Ausführungsform ist das mindestens eine zweite Kohlenhydrat ein Polyol ausgewählt aus der Gruppe bestehend aus Isomalt, Sorbit, Xylit, hydrogeniertem Stärkehydrolysat, insbesondere Maltitsirup, Maltit, Mannit, Erythrit, Lactit, Isomalt ST, Isomalt GS, 1,1-GPM, 1,6-GPS, 1,1-GPS und Kombinationen davon. Vorzugsweise ist das in dem transparenten Dragiermedium enthaltene mindestens eine zweite Kohlenhydrat Isomalt, bevorzugt mit einem Verhältnis von 1,6-GPS (6-O-α-D-Glucopyranosyl-D-sorbit) zu 1,1-GPM (1-O-α-D-Glucopyranosyl-D-mannit) von 70 bis 80 Gew.-% 1,6-GPS zu 30 bis 20 Gew.-% 1,1-GPM (jeweils bezogen auf die Gesamttrockensubstanz von 1,6-GPS zu 1,1-GPM des Isomalts).

Es kann auch vorgesehen sein, dass das mindestens eine zweite Kohlenhydrat ein Gemisch von mindestens zwei zweiten Kohlenhydraten, zum Beispiel ein Gemisch von zwei, drei, vier oder fünf verschiedenen zweiten Kohlenhydraten.

In einer besonders bevorzugten Ausführungsform ist das zweite Kohlenhydrat Isomalt, insbesondere Isomalt GS.

In einer besonders bevorzugten Ausführungsform ist vorgesehen, dass das Isomalt-haltige Dragiermedium 55 bis 75 Gew.-%, insbesondere 60 bis 75 Gew.-%, insbesondere 65 bis 75 Gew.-%, insbesondere 70 bis 75 Gew.-%, insbesondere 55 bis 70 Gew.-%, insbesondere 55 bis 65 Gew.-%, insbesondere 55 bis 60 Gew.-%, insbesondere 60 bis 70 Gew.-% (bezogen auf Gesamtmasse des Dragiermediums) Isomalt aufweist, insbesondere Isomalt GS.

In einer besonders bevorzugten Ausführungsform ist das Dragiermedium eine Dragierlösung oder ein Dragiersirup. In besonders bevorzugter Ausführungsform ist das Dragiermedium eine Dragierlösung. In besonders bevorzugter Ausführungsform ist das Dragiermedium, insbesondere die Dragierlösung oder das Dragiersirup, eine wässrige Dragierlösung oder ein wässriges Dragiermedium.

In einer besonders bevorzugten Ausführungsform ist das Isomalt-haltige Dragiermedium ein wässriges Isomalt-haltiges Dragiermedium, insbesondere eine, vorzugsweise wässrige, Isomalt-haltige Dragierlösung.

In einer besonders bevorzugten Ausführungsform der vorliegenden Erfindung umfasst die transparente Dragierlösung, insbesondere besteht sie aus, Isomalt, insbesondere Isomalt-GS, und Wasser, insbesondere demineralisiertem Wasser.

In einer besonders bevorzugten Ausführungsform ist vorgesehen, dass das Dragiermedium, insbesondere das Isomalt-haltige Dragiermedium, einen Trockensubstanzgehalt von 55 bis 80 Gew.-%, insbesondere 60 bis 75 Gew.-%, insbesondere 65 bis 73 Gew.-%, insbesondere 60 bis 73 Gew.-%, insbesondere 62 bis 71 Gew.-%, insbesondere 60 bis 70 Gew.-% (bezogen auf Gesamtmasse des Dragiermediums) aufweist.

In einer besonders bevorzugten Ausführungsform der vorliegenden Erfindung weist das Dragiermedium, insbesondere das Isomalt-haltige Dragiermedium, mindestens einen weiteren Stoff ausgewählt aus der Gruppe bestehend aus Kohlenhydraten, Zuckeralkoholen, Zuckeraustauschstoffen, Hochintensiv-Süßungsstoffen, Lipiden, Genusssäuren, Aminosäuren, Farbstoffen, Ballaststoffen, Proteinen, Geschmacksstoffen, Mineralien, Metalloxiden, Vitaminen und Kombinationen davon auf.

In einer besonders bevorzugten Ausführungsform weist das Dragiermedium, insbesondere das Isomalt-haltige Dragiermedium, 0,1 bis 1 Gew.-%, vorzugsweise 0,2 bis 0,7 Gew.-%, insbesondere 0,2 bis 0,6 Gew.-%, (bezogen auf Gesamtmasse des Dragiermediums) des mindestens einen weiteren Stoffes auf.

In einer besonders bevorzugten Ausführungsform ist das Dragiermedium, insbesondere die Dragierlösung, und die erhaltene Drageedecke zuckerfrei. In einer besonders bevorzugten Ausführungsform der vorliegenden Erfindung ist das Dragiermedium, insbesondere die Dragierlösung und die erhaltene Drageedecke zuckerfrei und enthält als einzige süßende Komponente Isomalt, insbesondere Isomalt GS.

Besonders bevorzugt enthält das im vorliegenden Verfahren verwendete transparente Dragiermedium keine Farbstoffe oder/und Trübungsmittel, insbesondere enthält das transparente Dragiermedium kein Titandioxid, Kalziumcarbonat, Stärke oder/und Kalziumphosphat. Das Dragiermedium ist daher bevorzugt Farbstoff-frei. Dies führt vorteilhafter Weise dazu, dass die mit einem solchen Dragiermedium dragierten Kaugummikerne eine transparente, das heißt durchsichtige, Drageedecke aufweisen. Vorteilhafterweise können so die zuvor auf eine Oberfläche des extrudierten Kaugummiformkörpers aufgestreuten farbigen Kohlenhydratpartikel durch die Drageedecke hindurch gesehen werden.

In einer bevorzugten Ausführungsform der vorliegenden Erfindung enthält das transparente Dragiermedium keine Emulgatoren, Sorbit oder Xylit.

In einer bevorzugten Ausführungsform der vorliegenden Erfindung enthält das transparente Dragiermedium höchstens 3 Gew.-%, bevorzugt höchstens 2 Gew.-%, besonders bevorzugt höchstens 1 Gew.-% oder kein Bindemittel (bezogen auf Gesamttrockensubstanz des Dragiermediums).

In einer bevorzugten Ausführungsform der vorliegenden Erfindung umfasst das in Verfahrensschritt h) erhaltene, transparent dragierte Kaugummi 15 bis 50 Gew.-%, bevorzugt 20 bis 40 Gew.-%, bevorzugt 25 bis 35 Gew.-% Drageedecke (bezogen auf Gesamttrockensubstanz des dragierten Kaugummis).

In bevorzugter Ausführungsform der vorliegenden Erfindung ist die Drageedecke eine Hartdrageedecke.

In einer besonders bevorzugten Ausführungsform weist die in Verfahrensschritt g) erhaltene Drageedecke mindestens 90 Gew.-%, mindestens 92 Gew.-%, mindestens 94 Gew.-%, mindestens 95 Gew.-%, mindestens 96 Gew.-%, mindestens 97 Gew.-%, mindestens 98 Gew.-%, mindestens 99 Gew.-% des mindestens einen zweiten Kohlenhydrats, insbesondere Polyols, insbesondere Di- oder Monosaccharodalkohols, insbesondere Isomalt auf (jeweils bezogen auf Gesamtmasse der Drageedecke).

In besonders bevorzugter Ausführungsform weist die in Verfahrensschritt g) erhaltene Drageedecke höchstens drei, höchstens zwei, höchstens eins, insbesondere kein Bindemittel (bezogen auf die Gesamtmasse der Drageedecke) auf.

In einer besonders bevorzugten Ausführungsform beträgt der Wassergehalt der in Verfahrensschritt g) erhaltenen Drageedecke, insbesondere Hartdrageedecke, von 0,05 bis 2,5 Gew.-%, insbesondere 0,1 bis 2 Gew.-%, insbesondere 0,5 bis 1,5 Gew.-% Wasser (jeweils bezogen auf die Gesamtmasse der Drageedecke).

In bevorzugter Ausführungsform umfasst, insbesondere besteht das erfindungsgemäße Verfahren aus den Verfahrensschritten a), b), c), d), e), f), g) und h), bevorzugt in dieser Reihenfolge.

In bevorzugter Ausführungsform umfasst, insbesondere besteht das erfindungsgemäße Verfahren aus den Verfahrensschritten a), b), c), d), e), Konditionierungsschritt, f), g) und h), bevorzugt in dieser Reihenfolge.

In einer besonders bevorzugten Ausführungsform wird Verfahrensschritt b) in einer Misch- und Knetmaschine, Verfahrensschritt c) in einem Extruder, Verfahrensschritt d) in oder auf einer Transportvorrichtung mit einer Auflagefläche für den extrudierten Kaugummiformkörper, Verfahrensschritt e) in einer Walzvorrichtung, Verfahrensschritt f) in einer Schneidvorrichtung, Verfahrensschritt g) in einem Dragierapparat, insbesondere einem automatischen Dragierapparat, zum Beispiel einem Driacoater, und Verfahrensschritt g1) gegebenenfalls in einem Trockner oder dem Dragierapparat durchgeführt.

Die vorliegende Erfindung betrifft auch ein transparent dragiertes Kaugummi herstellbar, insbesondere hergestellt, mit dem erfindungsgemäßen Verfahren.

Gemäß der vorliegenden Erfindung wird bevorzugt ein hartdragiertes, mit einer transparenten Hartdrageedecke umhülltes Kaugummi erhalten.

In einer besonders bevorzugten Ausführungsform der vorliegenden Erfindung ist die Drageedecke besonders lagerungsstabil.

In besonders bevorzugter Ausführungsform bleibt die Transparenz der transparenten Drageedecke über einen langen Zeitraum stabil.

In besonders bevorzugter Ausführungsform ist das erhaltene, bevorzugt hartdragierte, mit einer transparenten Drageedecke umhüllte Kaugummi auch besonders knusprig.

In besonders bevorzugter Ausführungsform bleibt die Knusprigkeit auch bei längerer Lagerung erhalten.

Insbesondere betrifft die Erfindung ein dragiertes Kaugummi mit einer transparenten den heterogen strukturierten Kaugummikern umschließenden Drageedecke, insbesondere Hartdrageedecke, herstellbar insbesondere hergestellt nach einem erfindungsgemäßen Verfahren.

Die vorliegende Erfindung betrifft insbesondere ein transparent dragiertes Kaugummi umfassend einen mindestens ein erstes Kohlenhydrat enthaltenden Kaugummikern und eine diesen Kaugummikern umhüllende transparente, mindestens ein zweites Kohlenhydrat enthaltende Drageedecke, wobei eine Oberfläche des Kaugummikerns als Crunch-Zwischenschicht mit einer Tiefe von 0,2 bis 2 mm ausgebildet ist, die farbige Kohlenhydratpartikel aufweist.

In einer besonders bevorzugten Ausführungsform der vorliegenden Erfindung ist der Kaugummikern des transparent dragierten Kaugummis, hergestellt mittels des erfindungsgemäßen Verfahrens, zuckerfrei. In einer besonders bevorzugten Ausführungsform der vorliegenden Erfindung ist die einen zuckerfreien oder zuckerhaltigen, insbesondere zuckerfreien, heterogen strukturierten Kaugummikern umhüllende transparente Drageedecke eines erfindungsgemäß hergestellten transparent dragierten Kaugummis zuckerfrei. In einer besonders bevorzugten Ausführungsform der vorliegenden Erfindung sind die im erfindungsgemäß hergestellten transparent dragierten Kaugummi vorhandenen farbigen Kohlenhydratpartikel zuckerfrei. In einer besonders bevorzugten Ausführungsform der vorliegenden Erfindung ist das transparent dragierte Kaugummi, hergestellt mittels des erfindungsgemäßen Verfahrens, vollständig zuckerfrei.

Im Zusammenhang mit der vorliegenden Erfindung wird unter "Isomalt" ein Gemisch aus 6-O-α-D-Glucopyranosyl-D-sorbit (1,6-GPS) und 1-O-α-D-Glucopyranosyl-D-mannit (1,1-GPM) und optional 1-O-α-D-Glucopyranosyl-D-sorbit (1,1-GPS) verstanden, insbesondere Isomalt GS oder Isomalt ST.

Im Zusammenhang mit der vorliegenden Erfindung wird unter "Isomalt ST" eine Mischung aus 53 bis 47 Gew.-% 1,6-GPS und 47 bis 53 Gew.-% 1,1-GPM (bezogen auf Trockengewicht des Isomalts ST) verstanden.

Im Zusammenhang mit der vorliegenden Erfindung wird unter "Isomalt GS" ein Gemisch aus 70 bis 80 Gew.-%, insbesondere 72 bis 78 Gew.-%, bevorzugt 75 Gew.-%, 1,6-GPS und 20 bis 30 Gew.-%, insbesondere 22 bis 28 Gew.-%, insbesondere 25 Gew.-%, 1,1-GPM (jeweils bezogen auf Trockensubstanz des Isomalt GS) verstanden.

Sofern im Zusammenhang mit der vorliegenden Erfindung von mehr als einer Oberfläche eines Kaugummiformkörpers gesprochen wird, sind damit Teiloberflächen in Bezug auf die Gesamtoberfläche des Kaugummiformkörpers gemeint, insbesondere solche Teiloberflächen, die sich durch die Geometrie des extrudierten Kaugummiformkörpers, insbesondere durch Kanten, Ecken oder Abrundungen als geometrisch abgrenzbare Teiloberflächen einer Gesamtoberfläche darstellen.

Im Zusammenhang mit der vorliegenden Erfindung werden unter "farbigen Kohlenhydratpartikeln" solche Kohlenhydratpartikel verstanden, die eine andere Farbe aufweisen als die Farbe, die der extrudierte Kaugummiformkörper, insbesondere die Oberfläche des extrudierten Kaugummiformkörpers, insbesondere der Kaugummikern, aufweist.

Die farbigen Kohlenhydratpartikel sind erfindungsgemäß also von einer anderen Farbe als die Oberfläche des Kaugummikerns.

Im Sinne der vorliegenden Erfindung können Farben zum Beispiel Rot, Grün, Blau, Cyan, Magenta, Violett, Pink, Rosa, Orange, Gelb, Grau, Braun, Schwarz, Weiß oder Schattierungen davon sein.

Im Zusammenhang mit der vorliegenden Erfindung wird unter einem "transparenten Dragiermedium" eine Lösung oder Suspension (auch als Sirup) bezeichnet, insbesondere eine Lösung oder insbesondere ein Sirup verstanden, insbesondere eine wässrige Lösung oder eine wässrige Suspension, welche in Form des Mediums transparent ist und welche nach Aufbringen auf einen Kaugummikern und Trocknen eine transparente Drageedecke ergibt.

Im Zusammenhang mit der vorliegenden Erfindung wird unter Knusprigkeit eine organoleptische und sensorische Charakteristik verstanden, die von einem Konsumenten insbesondere durch das Bissverhalten des Kaugummis im Mundraum erfahren wird, insbesondere ein bestimmtes Splitterverhalten und ein dazugehöriges Geräusch.

Im Zusammenhang mit der vorliegenden Erfindung wird unter dem Begriff "transparent" Lichtdurchlässigkeit verstanden. Insbesondere liegt die Transparenz der erfindungsgemäßen Drageedecke bei einem relativen Wert von 5 bis 9, bevorzugt von 6 bis 8, wenn sie auf einer Skala von 0 bis 10 bewertet wird und der Wert 0 "vollständig undurchsichtig" und der Wert 10 "vollständig durchsichtig, glasartig" entspricht.

Im Zusammenhang mit der vorliegenden Erfindung wird unter einer "Drageedecke" die Gesamtheit aller gegebenenfalls in verschiedenen Phasen und Zyklen aufgebrachten Dragierschichten, insbesondere mindestens eine durch Dragieren aufgebrachte Dragierschicht, insbesondere mehrere Dragierschichten verstanden.

Sofern im Zusammenhang mit der vorliegenden Erfindung quantitative Angaben, insbesondere Prozentangaben, von Komponenten eines Produktes oder einer Zusammensetzung angegeben sind, addieren diese, sofern nicht explizit anders angegeben oder fachmännisch ersichtlich, zusammen mit den anderen explizit angegeben oder fachmännisch ersichtlichen weiteren Komponenten der Zusammensetzung oder des Produktes auf 100 % der Zusammensetzung und/oder des Produktes auf.

Sofern im Zusammenhang mit der vorliegenden Erfindung ein "Vorhandensein", ein "Enthalten" oder ein "Aufweisen" einer Komponente in einer Menge von 0 Gew.-% ausgedrückt, erwähnt oder impliziert wird, bedeutet dies, dass die jeweilige Komponente nicht in messbarer Menge vorhanden, insbesondere nicht vorhanden, ist.

Sofern im Zusammenhang mit der vorliegenden Erfindung in einer Zahl die erste und zweite Nachkommastelle oder die zweite Nachkommastelle nicht angegeben sind/ist, sind/ist diese als Null zu setzen.

Weitere vorteilhafte Ausgestaltungen ergeben sich aus den Unteransprüchen.

Die Erfindung wird anhand des nachfolgenden Beispiels und den dazugehörigen Figuren näher erläutert.

Die Figuren zeigen:
- Figur 1: zeigt schematisch die erfindungsgemäße Verfahrensführung.
- Figur 2: zeigt schematisch die auf die Oberfläche eines extrudierten Kaugummiformkörpers aufgestreuten und anschließend eingewalzten farbigen Kohlenhydratpartikel.
- Figur 3: zeigt schematisch einen Vergleich der optischen Wirkung von in die Kaugummikernmasse eingearbeiteten farbigen Kohlenhydratpartikeln (3A, 3B) und auf die Oberfläche des Kaugummiformkörpers aufgestreuten und eingewalzten farbigen Kohlenhydratpartikeln (3C, 3D).
- Figur 4: zeigt erfindungsgemäß erhaltene transparent dragierte Kaugummis.

### Beispiel

Zur Herstellung von transparent dragierten Kaugummis mit einem heterogen strukturierten Kaugummikern und einer diesen Kern umhüllenden transparenten Drageedecke wurden folgende Kaugummikernkomponenten bereitgestellt.

Kaugummikernkomponenten:

| | |
|---|---|
| Kaugummigrundmasse "TFL3" (Euobase) | 16,00 Gew.-% |
| Kaugummigrundmasse "TULI Mod 2" (Euobase) | 16,00 Gew.-% |
| Sorbit (P60, Roquette, durchschnittlicher Partikeldurchmesser 230 µm) | 29,20 Gew.-% |
| Isomalt ST PF (Beneo) | 25,00 Gew.-% |
| Maltitsirup (Lycasin 80/55) (Roquette) | 10,60 Gew.-% |
| Pfefferminzaroma | 1,50 Gew.-% |
| Mentholaroma | 1,50 Gew.-% |
| Acesulfam-K | 0,10 Gew.-% |
| Aspartam | 0,10 Gew.-% |

Darüber hinaus wurden Isomalt-ST-PNC-Partikel bereitgestellt. Isomalt-ST-PNC-Partikel sind Isomalt ST-Partikel mit einem Partikeldurchmesser von 0,8 bis 1,25 mm. Die Isomalt-ST-PNC-Partikel wurden unter konstanter Bewegung in einem Dragierkessel mit Farblösung eingefärbt. Um grün gefärbte Partikel zu erhalten, wurden 12,5 kg Isomalt-ST-PNC-Partikel mit 600 g 0,05% "Bright Green P-WS" (419167-0010, Sensient) eingefärbt. Um blau gefärbte Partikel zu erhalten, wurden 12,5 kg Isomalt-ST-PNC-Partikel mit 600 g 0,05% "Spirulina Blue P-WS" (409422-0001, Sensient) eingefärbt. Die Farblösungen wurden auf ein sich bewegendes Bett von Isomalt-ST-PNC-Partikeln gegossen. Analog wurden vier weitere Isomalt-ST-PNC-Partikel-Sätze unterschiedlicher Farbe hergestellt.

Darüber hinaus wurde eine transparente Dragierlösung bereitgestellt. Diese wies 65 Gew.-% Isomalt GS und 35 Gew.-% demineralisiertes Wasser auf.

Die Kaugummikernkomponenten wurden bei Raumtemperatur gemischt, geknetet und anschließend bei einer Temperatur von 40 bis 45 °C in Form eines flächigen beige gefärbten Extrusionsstrangs (Bahn) extrudiert.

Auf eine Oberfläche des extrudierten Kaugummistrangs (extrudierter Kaugummiformkörper) wurden die farbigen Isomalt-PNC-Partikel (Mischung aus sechs verschiedenen Isomalt-PNC-Partikeln von jeweils unterschiedlicher, jedoch nicht beiger Farbe) aufgestreut, die bestreuten Kaugummiformkörper anschließend gewalzt und in Kissenform geschnitten, sodass heterogen strukturierte Kaugummikerne erhalten wurden. Bezogen auf die Gesamtmasse des gesamten Kaugummikerns betrug die Menge an farbigen Isomalt-PNC-Partikeln 7 %.

Die so erhaltenen kissenförmigen, heterogen strukturierten Kaugummikerne wiesen eine Länge von 19 mm, eine Breite von 12 mm und eine Höhe von 6 mm bei einer Gesamtoberfläche von 530 mm² und einem Volumen von 960 mm³ auf. Im anschließenden Konditionierungsschritt wurden die so erhaltenen Kaugummikerne auf Raumtemperatur abgekühlt.

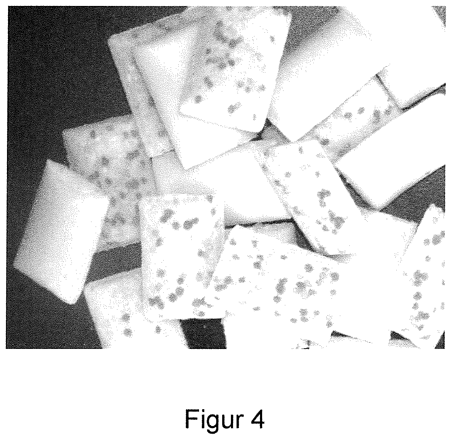

Die transparente Dragierlösung aus 65 Gew.-% Isomalt GS und 35 Gew.-% demineralisiertem Wasser wurde bei einer Temperatur von 60 °C in 10 Phasen und 95 Zyklen über einen Gesamtzeitraum von 313 Minuten auf die kissenförmigen Kaugummikerne aufgesprüht und mit 25 °C warmer Trockenluft getrocknet (relative Luftfeuchte <15%). Eine Phase ist ein Zusammenschluss mehrerer Zyklen mit annähernd gleichen Parametern wie Auftragsmenge, Verteilzeit und Kristallisation beziehungsweise Trocknungszeit, wobei diese Phasen Aufbauphasen und Hauptphasen, Glättungsphasen und Wachsphasen, die jeweils mehrere Zyklen umfassen können, aufweisen können. Bezogen auf das Gesamtgewicht der fertigen, dragierten Kaugummis (Figur 4) hatte die Drageedecke einen Anteil von 26,8 Gew.-%.

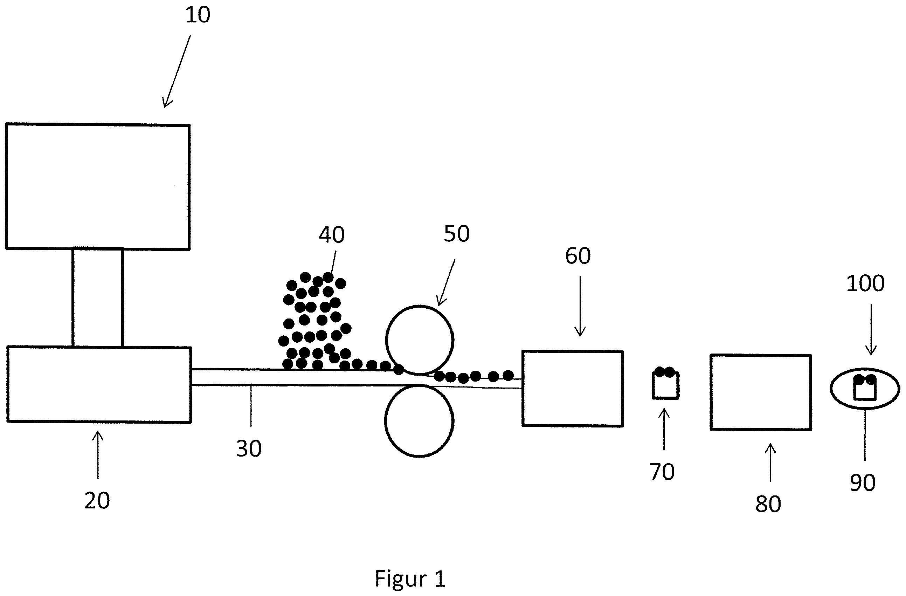

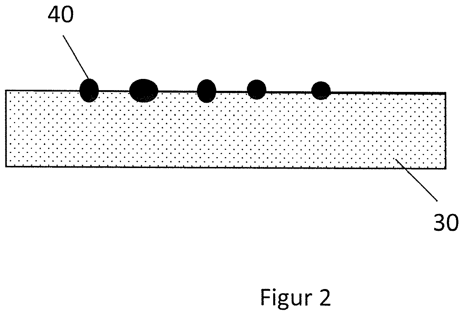

Figur 1 zeigt schematisch die erfindungsgemäße Verfahrensführung. Demgemäß werden die in Verfahrensschritt a) bereitgestellten Kaugummikernkomponenten in Verfahrensschritt b) in einer in Figur 1 dargestellten Misch- und Knetvorrichtung 10 gemischt und geknetet zum Erhalt einer Kaugummikernmasse. In einem Extruder 20 wird dann die aus der Misch- und Knetvorrichtung 10 überführte Kaugummikernmasse extrudiert und ein extrudierter Kaugummiformkörper in Form eines flächigen Kaugummistrangs 30 erhalten. Auf diesen extrudierten Kaugummiformkörper 30 werden farbige Kohlenhydratpartikel 40 aufgestreut, in einer Walzvorrichtung 50 werden die aufgestreuten Kohlenhydratpartikel 40 in die Oberfläche des extrudierten Kaugummiformkörpers 30 eingewalzt, sodass sich die in Figur 2 dargestellte Struktur mit in die Oberfläche des Kaugummiformkörpers 30 eingewalzten farbigen Kohlenhydratpartikel 40 ergibt. In einer Schneidvorrichtung 60 wird der gewalzte Kaugummiformkörper 30 nach gegebenenfalls erfolgtem Konditionierschritt geschnitten, sodass heterogen strukturierte Kaugummikerne 70 erhalten werden, die anschließend in einer Dragierapparatur 80 unter Einsatz einer transparenten Dragierlösung beschichtet werden, sodass mit einer transparenten Drageedecke 90 ausgestattete dragierte Kaugummis 100 mit heterogen strukturiertem Kern erhalten werden.

Unter Berücksichtigung einer Kissenoberfläche von ca. 530 mm², einem Kissenvolumen von ca. 960 mm³, einem durchschnittlichen Isomalt-ST-PNC-Partikeldurchmesser von 1 mm und einer dadurch erhaltenen Querschnittsfläche der Partikel von 0,785 mm² sind etwa 135 Isomalt-ST-PNC-Partikel notwendig, um 20 % der Oberfläche eines Kaugummikernkissens zu bedecken. Dies gilt dann, wenn - wie erfindungsgemäß vorgesehen - die Partikel von außen in den Kaugummikern eingedrückt werden, sodass im Wesentlichen die ganze Halbkugel des Isomalt-ST-PNC-Partikels von außen sichtbar ist.

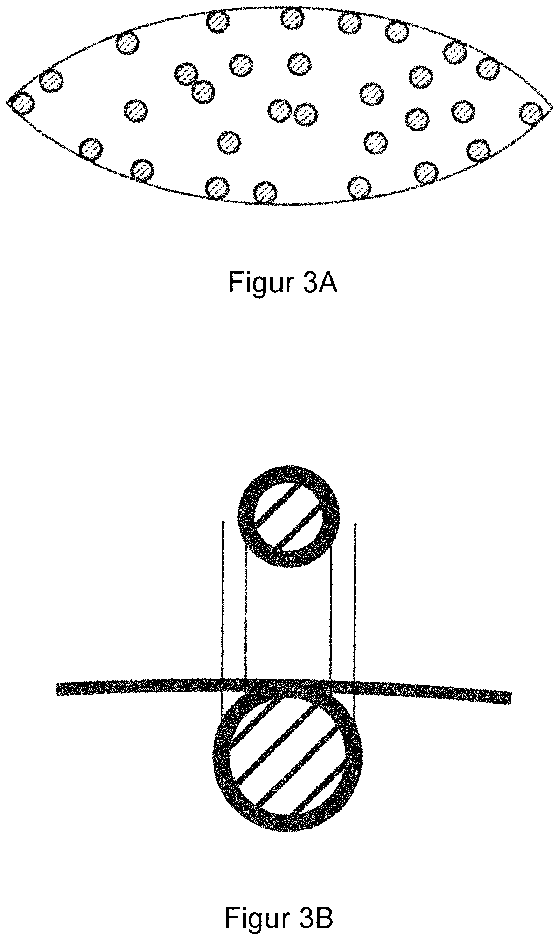

Werden in einer nicht erfindungsgemäßen Verfahrensweise die gleichen farbigen Isomalt-ST-PNC-Partikel nicht auf die Oberfläche eines extrudierten Kaugummiformkörpers aufgestreut, sondern vielmehr zusammen mit den Kaugummikernkomponenten zum Erhalt einer Kaugummikernmasse gemischt und geknetet (Figur 3A), so sind die Partikel untergemischt und es ist nur ungefähr die Hälfte der Halbkugel, also der Querschnittsoberfläche sichtbar (Figur 3B), da die Kaugummimasse fast vollständig undurchsichtig ist. Demgemäß sind dann doppelt so viele, also etwa 270 Partikel an der Oberfläche notwendig, um 20 % der Oberfläche abzudecken. Die Farbe dieser Partikel erscheint nicht so hell wie im erfindungsgemäßen Vorgehen, denn auch wenn sie sich dicht an der Oberfläche befinden, sind sie dennoch teilweise von der Kaugummimasse bedeckt. Um auf einen Anteil von 270 Partikeln an der Oberfläche zu kommen, muss im gesamten Kaugummikern die gleiche Dichte wie an der Oberfläche vorliegen, das heißt etwa 27 % des Kaugummikerns muss aus farbigen Isomalt-ST-PNC-Partikeln, bestehen, also etwa 487 Partikel. Dementsprechend werden etwa 3,6-mal so viele Partikel wie im erfindungsgemäßen Verfahren benötigt, um eine vergleichbare Sichtbarkeit zu gewährleisten.

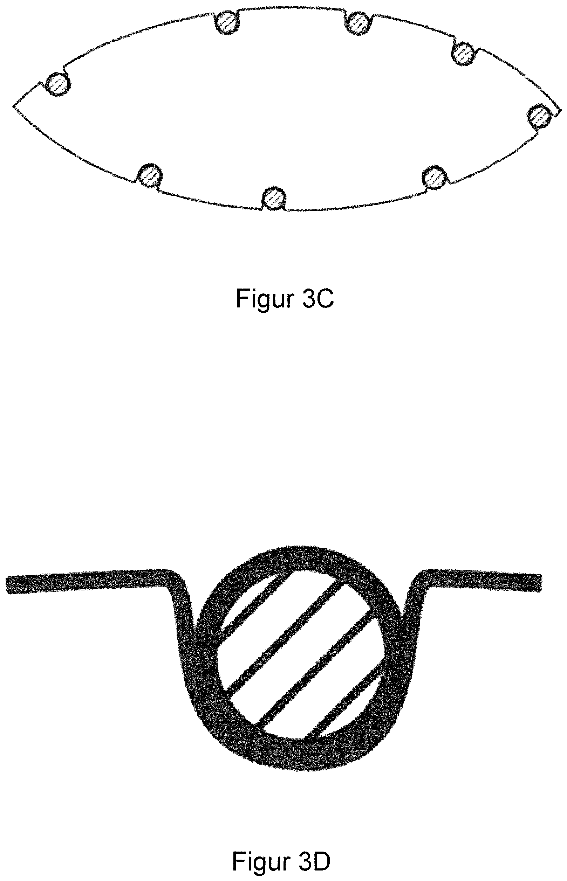

Figur 3A zeigt das Ergebnis einer nicht-erfindungsgemäßen Verfahrensweise, gemäß der Partikel in der Kaugummikernmasse untergemischt sind, sodass die Partikel, die nicht an der Oberfläche sind, unsichtbar bleiben. Demgegenüber zeigt Figur 3C das Ergebnis der erfindungsgemäßen Verfahrensweise, gemäß der die Partikel oberflächlich in die Kaugummikernmasse eingewalzt und daher von außen sichtbar sind. Figur 3B zeigt im Detail, dass - sofern die Partikel in der Masse untergemischt sind - lediglich die Hälfte der Querschnittsoberfläche, also der Kugelhalbfläche sichtbar ist, während im Fall, dass in der erfindungsgemäßen Verfahrensweise die Partikel lediglich in die Oberfläche der Masse eingewalzt sind, die gesamte Querschnittsoberfläche, das heißt die gesamte Halbkugel (Figur 3D) sichtbar ist.

Durch die erfindungsgemäß vorgesehene Lokalisierung der farbigen Isomalt ST-PNC-Partikel ausschließlich auf der Oberfläche des Kaugummikerns ergibt sich eine Crunch-Zwischenschicht, die zu einem vorteilhaften zweistufigen Crunch, das heißt knusprigem Bissverhalten, führt.

Die erfindungsgemäße Verfahrensweise führt daher zur Bereitstellung von optisch und organoleptisch verbesserten transparent dragierten Kaugummis (Figur 4) mit farblich heterogen strukturierten Kaugummikernen, wobei vorteilhafterweise dieses Verfahren eine geringere Menge an farbigen Kohlenhydratpartikeln benötigt, um einen vergleichbaren, insbesondere sogar verbesserten optischen Effekt zu erzielen.

## Patentansprüche

1. Verfahren zur Herstellung von transparent dragierten Kaugummis mit einem heterogen strukturierten Kaugummikern und einer diesen Kern umhüllenden transparenten Drageedecke umfassend die folgenden Verfahrensschritte:
a) Bereitstellen von Kaugummikernkomponenten, insbesondere mindestens einer Kaugummigrundmasse und mindestens einem ersten Kohlenhydrat, farbigen Kohlenhydratpartikeln mit einem Partikeldurchmesser von 0,2 bis 2 mm, sowie einem transparenten Dragiermedium enthaltend mindestens ein zweites Kohlenhydrat,
b) Mischen und Kneten der Kaugummikernkomponenten zum Erhalt einer Kaugummikernmasse,
c) Extrudieren der Kaugummikernmasse zum Erhalt eines extrudierten Kaugummiformkörpers,
d) Aufstreuen der farbigen Kohlenhydratpartikel auf eine Oberfläche des extrudierten Kaugummiformkörpers,
e) Walzen des mit farbigen Kohlenhydratpartikeln bestreuten Kaugummiformkörpers,
f) Schneiden des in Schritt e) erhaltenen gewalzten Kaugummiformkörpers zum Erhalt von heterogen strukturierten Kaugummikernen,
g) Dragieren der in Schritt f) erhaltenen heterogen strukturierten Kaugummikerne mit dem transparenten Dragiermedium und
h) Erhalt von transparent dragierten Kaugummis mit heterogen strukturiertem Kaugummikern.

2. Verfahren nach Anspruch 1, wobei der Anteil der farbigen Kohlenhydratpartikel an der Kaugummikernmasse von 3 bis 20 Gew.-% (bezogen auf die gesamte Kaugummikernmasse) beträgt.

3. Verfahren nach Anspruch 1 oder 2, wobei die farbigen Kohlenhydratpartikel Polyolpartikel sind.

4. Verfahren nach einem der vorhergehenden Ansprüche, wobei mindestens 80 Gew.-% der in Verfahrensschritt a) bereitgestellten farbigen Kohlenhydratpartikel (bezogen auf die Gesamttrockensubstanz der gefärbten Kohlenhydratpartikel) einen Partikeldurchmesser von 0,2 mm bis 2 mm, insbesondere 0,5 bis 1,6 mm, aufweisen.

5. Verfahren nach einem der vorhergehenden Ansprüche, wobei die farbigen Kohlenhydratpartikel mindestens einen Aromastoff enthalten.

6. Verfahren nach einem der vorhergehenden Ansprüche, wobei die in Verfahrensschritt b) erhaltene Kaugummikernmasse 40 bis 70 Gew.-% des mindestens einen ersten Kohlenhydrats (bezogen auf Gesamttrockensubstanz der Kaugummikernkomponenten) aufweist.

7. Verfahren nach einem der vorhergehenden Ansprüche, wobei das mindestens eine erste Kohlenhydrat ein Polyol ist, insbesondere Isomalt.

8. Verfahren nach einem der vorhergehenden Ansprüche, wobei zusätzlich zu der mindestens einen Kaugummigrundmasse und dem mindestens einen ersten Kohlenhydrat weitere Kaugummikernkomponenten ausgewählt sind aus der Gruppe bestehend aus Geschmacksstoffen, Farbstoffen, Prozesshilfsstoffen wie Trenn- oder Gleitmittel, Intensivsüßstoffen, Aromastoffen und Kombinationen davon.

9. Verfahren nach Anspruch 8, wobei der Intensivsüßstoff ausgewählt ist aus der Gruppe bestehend aus Aspartam, Acesulfam-K, Sucralose, Saccharin, Glycyrrhizin, Thaumatin, Neohesperidin-Dihydrochalkon, Cyclamat, Steviaextrakt, Steviolglycoside, Steviosid, Rebaudiosid A, Monellin, Alitam und Kombinationen davon.

10. Verfahren nach einem der vorhergehenden Ansprüche, wobei der Kaugummiformkörper in Schritt f) in Form eines Streifens, Kissens, Stäbchens oder einer Scheibe geschnitten wird.

11. Verfahren nach einem der vorhergehenden Ansprüche, wobei das in dem transparenten Dragiermedium enthaltene mindestens eine zweite Kohlenhydrat ein Polyol ist.

12. Verfahren nach einem der vorhergehenden Ansprüche, wobei das in der transparenten Dragierlösung enthaltene mindestens eine zweite Kohlenhydrat Isomalt ist, bevorzugt mit einem Verhältnis von 1,6-GPS (6-O-α-D-Glucopyranosyl-D-sorbit) zu 1,1-GPM (1-O-α-D-Glucopyranosyl-D-mannit) von 70 bis 80 Gew.-% 1,6-GPS zu 30 bis 20 Gew.-% 1,1-GPM (jeweils bezogen auf die Gesamttrockensubstanz von 1,6-GPS zu 1,1-GPM des Isomalts).

13. Verfahren nach einem der vorhergehenden Ansprüche, wobei der Verfahrensschritt g) in mindestens zwei Zyklen, insbesondere 5 bis 100 Zyklen, durchgeführt wird.

14. Verfahren nach einem der vorhergehenden Ansprüche, wobei das in Verfahrensschritt h) erhaltene transparent dragierte Kaugummi 15 bis 50 Gew.-% Drageedecke (bezogen auf Gesamttrockensubstanz des dragierten Kaugummis) umfasst.

15. Dragiertes Kaugummi mit einer transparenten, einen heterogen strukturierten Kaugummikern umschließenden, Drageedecke herstellbar, insbesondere hergestellt, nach einem Verfahren nach einem der Ansprüche 1 bis 14.

16. Transparent dragiertes Kaugummi umfassend einen mindestens ein erstes Kohlenhydrat enthaltenden Kaugummikern und eine diesen Kaugummikern umhüllende transparente, mindestens ein zweites Kohlenhydrat enthaltende Drageedecke, wobei eine Oberfläche des Kaugummikerns als Crunch-Zwischenschicht mit einer Höhe von 0,2 bis 2 mm ausgebildet ist, die farbige Kohlenhydratpartikel aufweist.

## Claims

1. Method for producing transparently sugar-coated chewing gum, having a heterogeneously structured chewing gum core and a transparent sugar-coated surface layer enveloping this core, comprising the following method steps:
a) providing chewing gum core components, in particular at least one chewing gum base mass and at least one first carbohydrate, coloured carbohydrate particles with a particle diameter of 0.2 to 2 mm, and a transparent sugar-coating medium containing at least one second carbohydrate,
b) mixing and kneading the chewing gum core components to obtain a chewing gum core mass,
c) extruding the chewing gum core mass to obtain an extruded shaped chewing gum body,
d) scattering the coloured carbohydrate particles on a surface of the extruded shaped chewing gum body,
e) rolling the shaped chewing gum body scattered with coloured carbohydrate particles,
f) cutting the rolled shaped chewing gum body obtained in step e) to obtain heterogeneously structured chewing gum cores,
g) sugar-coating the heterogeneously structured chewing gum cores obtained in step f) with the transparent sugar-coating medium and
h) obtaining transparently sugar-coated chewing gum, having a heterogeneously structured chewing gum core.

2. Method according to claim 1, wherein the proportion of the coloured carbohydrate particles in the chewing gum core mass is from 3 to 20% by weight (based on the total chewing gum core mass).

3. Method according to claim 1 or 2, wherein the coloured carbohydrate particles are polyol particles.

4. Method according to one of the preceding claims, wherein at least 80% by weight of the coloured carbohydrate particles provided in method step a) (based on the total dry matter of the coloured carbohydrate particles) have a particle diameter of 0.2 mm to 2 mm, in particular 0.5 to 1.6 mm.

5. Method according to one of the preceding claims, wherein the coloured carbohydrate particles contain at least one flavouring substance.

6. Method according to one of the preceding claims, wherein the chewing gum core mass obtained in method step b) has 40 to 70% by weight of the at least one first carbohydrate (based on the total dry matter of the chewing gum core components).

7. Method according to one of the preceding claims, wherein the at least one first carbohydrate is a polyol, in particular isomalt.

8. Method according to one of the preceding claims, wherein in addition to the at least one chewing gum base mass and the at least one first carbohydrate, further chewing gum core components are selected from the group consisting of taste producing substances, colourings, processing aids such as release agents or lubricants, intense sweeteners, flavouring substances and combinations thereof.

9. Method according to claim 8, wherein the intense sweetener is selected from the group consisting of aspartame, acesulfame-K, sucralose, saccharin, glycyrrhizin, thaumatin, neohesperidin dihydrochalcone, cyclamate, stevia extract, steviol glycosides, stevioside, rebaudioside A, monellin, alitame, and combinations thereof.

10. Method according to one of the preceding claims, wherein the shaped chewing gum body is cut in step f) in the form of a strip, pillow, stick or disc.

11. Method according to one of the preceding claims, wherein the at least one second carbohydrate contained in the transparent sugar-coating medium is a polyol.

12. Method according to one of the preceding claims, wherein the at least one second carbohydrate contained in the transparent sugar-coating solution is isomalt, preferably with a ratio of 1,6-GPS (6-O-α-D-glucopyranosyl-D-sorbitol) to 1,1-GPM (1-O-α-D-glucopyranosyl-D-mannitol) from 70 to 80% by weight 1,6-GPS to 30 to 20% by weight 1,1-GPM (in each case based on the total dry matter of 1,6-GPS to 1,1-GPM of isomalt).

13. Method according to one of the preceding claims, wherein method step g) is carried out in at least two cycles, in particular 5 to 100 cycles.

14. Method according to one of the preceding claims, wherein the transparently sugar-coated chewing gum obtained in method step h) comprises 15 to 50% by weight of sugar-coated surface layer (based on the total dry matter of the sugar-coated chewing gum).

15. Sugar-coated chewing gum, having a heterogeneously structured chewing gum core enveloped by a transparent sugar-coated surface layer producible, in particular produced, by a method according to one of claims 1 to 14.

16. Transparently sugar-coated chewing gum comprising a chewing gum core containing at least a first carbohydrate and a transparently sugar-coated surface layer containing at least a second carbohydrate enveloping this chewing gum core, wherein one surface of the chewing gum core is designed as a crunchy intermediate layer with a height of 0.2 to 2 mm having coloured carbohydrate particles.

## Revendications

1. Procédé de production d'un chewing gum enrobé de sucre transparent, ayant un noyau de chewing gum à structure hétérogène et une couche de surface enrobée de sucre transparent enveloppant ce noyau, comprenant les étapes suivantes du procédé :
a) fournir des composants du noyau de chewing gum, en particulier au moins une masse de base de chewing gum et au moins un premier glucide, des particules glucide colorées d'un diamètre de particule de 0,2 à 2 mm, et un milieu d'enrobage de sucre transparent contenant au moins un deuxième glucide,
b) mélanger et malaxer les composants du noyau de chewing gum pour obtenir une masse de noyau de chewing gum,
c) extruder la masse de noyau de chewing gum pour obtenir un corps de chewing gum formé extrudé,
d) disperser les particules de glucide colorées sur une surface du corps de chewing gum extrudé,
e) rouler le corps de chewing gum formé, dispersé avec des particules glucide colorées,
f) couper le corps de chewing gum roulé obtenu à l'étape e) pour obtenir des noyaux de chewing gum à structure hétérogène,
g) enrober de sucre les noyaux de chewing gum à structure hétérogène obtenus à l'étape f) avec le milieu d'enrobage de sucre transparent et
h) obtenir un chewing gum enrobé de sucre transparent, ayant un noyau de chewing gum à structure hétérogène.

2. Procédé selon la revendication 1, dans lequel la proportion des particules de glucide colorées dans la masse du noyau de chewing gum est de 3 à 20% en poids (par rapport à la masse totale du noyau de chewing gum).

3. Procédé selon la revendication 1 ou 2, dans lequel les particules de glucide colorées sont des particules de polyol.

4. Procédé selon l'une des revendications précédentes, dans lequel au moins 80% en poids des particules de glucide colorées fournies à l'étape a) du procédé (sur la base de la matière sèche totale des particules de glucide colorées) ont un diamètre de particule de 0,2 mm à 2 mm, en particulier de 0,5 à 1,6 mm.

5. Le procédé selon l'une des revendications précédentes, dans lequel les particules glucide colorées contiennent au moins une substance aromatisante.

6. Procédé selon l'une des revendications précédentes, dans lequel la masse du noyau de chewing gum obtenue à l'étape b) du procédé a de 40 à 70% en poids du au moins un premier glucide (sur la base de la matière sèche totale des composants du noyau de chewing gum).

7. Procédé selon l'une des revendications précédentes, dans lequel le au moins un premier glucide est un polyol, en particulier l'isomalt.

8. Procédé selon l'une des revendications précédentes, dans lequel, outre la au moins une masse de base de chewing gum et le au moins un premier glucide, d'autres composants du noyau de chewing gum sont choisis dans le groupe constitué par les substances productrices de goût, les colorants, les aides à la production telles que les agents de démoulage ou les lubrifiants, les édulcorants intenses, les substances aromatisantes et les combinaisons de celles-ci.

9. Procédé selon la revendication 8, dans lequel l'édulcorant intense est choisi dans le groupe constitué par l'aspartame, l'acésulfame-K, le sucralose, la saccharine, la glycyrrhizine, la thaumatine, la néohespéridine dihydrochalcone, le cyclamate, l'extrait de stévia, les glycosides de stéviol, le stévioside, le rébaudioside A, la monelline, l'alitame, et des combinaisons de ceux-ci.

10. Procédé selon l'une des revendications précédentes, dans lequel le corps de chewing gum formé est coupé à l'étape f) sous la forme d'une bande, d'un oreiller, d'un bâton ou d'un disque.

11. Procédé selon l'une des revendications précédentes, dans lequel le au moins un second glucide contenu dans le milieu d'enrobage de sucre transparent est un polyol.

12. Procédé selon l'une des revendications précédentes, dans lequel le au moins un second glucide contenu dans la solution enrobage de sucre transparente est l'isomalt, préférablement avec un rapport de 1, 6-GPS (6-O-α-D-glucopyranosyl-D-sorbitol) à 1,1-GPM (1-O-α-D-glucopyranosyl-D-mannitol) de 70 à 80 % en poids de 1,6-GPS à 30 à 20 % en poids de 1,1-GPM (dans chaque cas sur la base de la matière sèche totale de 1,6-GPS à 1,1-GPM d'isomalt).

13. Procédé selon l'une des revendications précédentes, dans lequel l'étape g) du procédé est réalisée en au moins deux cycles, en particulier de 5 à 100 cycles.

14. Procédé selon l'une des revendications précédentes, dans lequel le chewing gum enrobé de sucre transparent obtenu à l'étape h) comprend 15 à 50% en poids de couche de surface enrobée de sucre (sur la base de la matière sèche totale du chewing gum enrobé de sucre).

15. Chewing gum enrobé de sucre, ayant un noyau de chewing gum à structure hétérogène enveloppé d'une couche de surface enrobée de sucre transparente pouvant être produite, en particulier produite, par un procédé selon l'une des revendications 1 à 14.

16. Chewing gum enrobé de sucre transparent comprenant un noyau de chewing gum contenant au moins un premier glucide et une couche de surface enrobée de sucre transparent contenant au moins un second glucide enveloppant ce noyau de chewing gum, dans lequel une surface du noyau de chewing gum est conçue comme une couche intermédiaire croustillante d'une hauteur de 0,2 à 2 mm ayant des particules de glucide colorées.
